# EUROPÄISCHE PATENTANMELDUNG

(11) **EP 4 390 591 A1**
(43) Veröffentlichungstag der Anmeldung: **26.06.2024**
(21) Anmeldenummer: 22214610.2
(22) Anmeldetag: 19.12.2022
(51) Int. Cl.: G05B 23/02, G06F 3/048

(54) **VERFAHREN ZUR ÜBERWACHUNG VON ALARMEN IN EINEM PROZESSAUTOMATISIERUNGSSYSTEM UND PROZESSLEITSYSTEM**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Zur Überwachung von Alarmen in einem Prozessautomatisierungssystem, dessen Komponenten durch computerbasierte Objekte repräsentiert werden, werden den Objekten zugeordnete Mess- und/oder Zustandsgrößen mittels Sensoren und/oder Beobachtersystemen ermittelt und ereignisabhängig und/oder innerhalb vorgebbarer Zeitintervalle durch eine Steuerungseinrichtung (200) erfasst. Die Objekte werden an einer graphischen Benutzerschnittstelle einer mit der Steuerungseinrichtung (200) verbundenen Bedien- und Beobachtungsstation (100) dargestellt. Bei Erfüllung von für ausgewählte Mess- und/oder Zustandsgrößen spezifizierten Bedingungen werden Alarmstatusinformationen umfassende Alarme erzeugt, die innerhalb eines allgemeinen Alarmanzeigebereichs (120) der graphischen Benutzerschnittstelle dargestellt werden. Für durch eine benutzerindividuelle Auswahl über die graphische Benutzerschnittstelle vorgegebener Objekte, Objektattribute und/oder Objektgruppen (131) Alarmstatusinformationen von der Steuerungseinrichtung (200) abgefragt und innerhalb eines benutzerindividuellen Alarmanzeigebereichs (141) dargestellt.

## Beschreibung

Die vorliegende Erfindung betrifft ein Verfahren zur Überwachung von Alarmen in einem Prozessautomatisierungssystem und ein Prozessleitsystem, das zur Durchführung des Verfahrens geeignet ist.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessleitsystems besteht in einer vollständigen und korrekten Erfassung und Abbildung von Komponenten eines industriellen Prozessautomatisierungssystems. Dies schließt insbesondere eine Aufbereitung aktueller Mess- und Zustandsdaten der Komponenten des industriellen Prozessautomatisierungssystems sowie eine rechtzeitige und zielgerichtete Signalisierung von Alarmzuständen ein.

Mittels eines Engineering-Systems können insbesondere Steuerungsprogramme für Automatisierungsgeräte projektiert werden, die zur Steuerung bzw. Regelung einer technischen Anlage oder einer komplexen Maschine vorgesehen sind. Zur Laufzeit der Steuerungsprogramme bzw. während eines Runtime-Betriebs wird ein technischer Prozess durch die Automatisierungsgeräte, wie speicherprogrammierbare Steuerungen, gesteuert bzw. geregelt. Im Rahmen einer Prozessüberwachung während des Runtime-Betriebs kann eine Bedienperson mittels eines Prozessleitsystems Prozessabbilder aufrufen, um durch eine Visualisierung des Prozessabbilds einen Überblick über einen aktuellen Anlagenzustand zu erhalten sowie eine Prozessführung bzw. -bedienung wahrzunehmen.
*Unabhängig vom grammatikalischen Geschlecht eines bestimmten Begriffes sind Personen mit männlicher, weiblicher oder anderer Geschlechteridentität mit umfasst.*

In EP 3 528 074 B1 ist ein Verfahren zum Überprüfen der Beziehung zwischen einem visuell auf einem Operator-Client eines Prozessleitsystems dargestellten und einem akustisch ausgegebenen Prozessalarm eines Prozessobjektes beschrieben. Ein Operator-Server des Prozessleitsystems umfasst eine Alarmmelde-Komponente zum Aufbereiten von akustisch auszugebenden Prozessalarmen und zum Übermitteln dieser Prozessalarme an eine Alarmausgabe und eine Alarmanzeige-Komponente zum Aufbereiten von visuell auszugebenden Prozessalarmen und zum Übermitteln dieser Prozessalarme an den Operator-Client, auf welchem die Prozessalarme darstellbar sind. Dabei ist die Ausgabe der jeweiligen akustischen Prozessalarme mittels einer Operator-Eingabe am Operator-Client deaktivierbar. Darüber hinaus ist das Prozessleitsystem dafür ausgestaltet, dass ein Operator jederzeit feststellen kann, ob eine Inkonsistenz zwischen einem akustisch und einem visuell ausgegebenen Prozessalarm vorliegt.

Aus EP 3 690 580 B1 ist ein Prozessleitsystem bekannt, das automatisch einen Prozessalarm auslöst, wenn Prozessdaten eine Auslösebedingung erfüllen. In diesem Fall übermittelt das Prozessleitsystem eine Alarmmeldung an ein Alarmsystem, das den Prozessalarm an eine Bedienperson ausgibt. Das Prozessleitsystem archiviert zu Erfassungszeitpunkten die Prozessdaten und die ausgelösten Prozessalarme. Das Alarmsystem fordert aufgrund der Selektion eines Prozessdatums und der Vorgabe eines Darstellungszeitraums durch die Bedienperson vom Prozessleitsystem für den Darstellungszeitraum eine Historie des selektierten Prozessdatums und eine Historie der einem jeweiligen Prozessobjekt zugeordneten Prozessalarme an. Das Alarmsystem gibt einen zeitlichen Verlauf des Prozessdatums als Grafik an die Bedienperson aus. Die Grafik umfasst eine Anzahl von Prozessdatenpunkten, die das Alarmsystem anhand der Werte des selektierten Prozessdatums eines jeweiligen Erfassungszeitraums ermittelt. Das Alarmsystem stellt die Prozessdatenpunkte in der Grafik in einer Codierung dar, die für den jeweiligen Prozessdatenpunkt jeweils die höchste Priorität angibt, mit der während des jeweiligen Erfassungszeitraums Prozessalarme aufgetreten sind.

EP 3 968 107 B1 betrifft ein Prozessüberwachungssystem mit zumindest einer Bedieneinheit, die mit einem Server in Verbindung steht. Der Server weist zur Überwachung einer Automatisierungsanlage einen Visualisierungsservice auf, der die Bedieneinheit mit Prozesswerten und Alarmmeldungen versorgt. Die Bedieneinheit zeigt in einem Ein-Ausgabefenster ein Prozessobjekt mit seinem Prozesswerten an. Außerdem zeigt die Bedieneinheit eine Meldefolgeanzeige mit Alarmmeldungen aus einer Alarmliste an. Das Ein-Ausgabefenster weist ein Eingabefeld für Kurznachrichten und ein Aktivierungsmittel auf. Zur Verwaltung der Prozessobjekte ist eine Verwaltungskomponente vorgesehen, die bei einer eingegebenen Kurznachricht und einem aktivierten Aktivierungsmittel für das dem Eingabefeld zugeordnete Prozessobjekt eine Alarm-Instanz anlegt und die Kurznachricht als weitere Alarmmeldung in der Alarmliste hinterlegt. Die Meldefolgeanzeige ist dahingehend erweitert, weiteren Alarmmeldungen aus der Alarmliste als Kurznachrichten anzuzeigen.

Ein effizientes Alarmmanagement verfahrenstechnischer Anlagen zielt darauf ab, dass eine Bedienperson möglichst schnell Alarme erkennen und zu deren Quelle navigieren kann. Da es in einer verfahrenstechnischen Anlage sehr viele Alarmquellen geben kann, werden Alarme üblicherweise über Gruppenbildung verdichtet. Auf diese Weise ist eine überschaubare Darstellung möglich. Allgemeine Alarmübersichten an graphischen Benutzerschnittstellen von Bedien- und Beobachtungsstationen berücksichtigen grundsätzlich sämtliche Alarme, die in einem Verantwortungsbereich einer Bedienperson liegen. Je nach Verantwortungsbereich und Situation haben Bedienpersonen unterschiedliche Gruppen von Prozessobjekten oder Anlagenbilder zu überwachen. Dies kann dazu führen, dass Alarmstatusinformationen zu individuellen Prozessobjekten oder Anlagenplanausschnitten zu detailreich sind, während allgemeine Alarmübersichten nur relativ oberflächliche Informationen vermitteln.

Der vorliegenden Erfindung liegt die Aufgabe zugrunde, ein Verfahren zur Überwachung von Alarmen in einem Prozessautomatisierungssystem zu schaffen, das eine effiziente Verfolgung für eine Bedienperson tatsächlich individuell relevanter Alarmstatusinformationen mit aussagekräftigen Detailinformationen ermöglicht, sowie eine geeignete Vorrichtung zur Implementierung des Verfahrens anzugeben.

Diese Aufgabe wird erfindungsgemäß durch ein Verfahren mit den in Patentanspruch 1 angegebenen Merkmalen und durch ein Prozessleitsystem mit den in Patentanspruch 11 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Überwachung von Alarmen in einem industriellen Prozessautomatisierungssystem werden Komponenten des industriellen Prozessautomatisierungssystems durch computerbasierte Objekte repräsentiert. Dabei werden die Objekte innerhalb einer hierarchischen Objektstruktur verwaltet, die Abhängigkeiten zwischen Objekten umfasst.

Computerbasierte Objekte können beispielsweise Betriebssysteme, Steuerungs- oder Anwendungsprogramme, durch Betriebssysteme, Steuerungs- oder Anwendungsprogramme bereitgestellte Dienste, Dienstkomponenten, Leistungsmerkmale, Funktionen oder Prozeduren, Zugriffsrechte auf Systemressourcen oder Peripheriegeräte sowie auf einem Speichermedium befindliche Daten sein. Funktionen oder Prozeduren umfassen dabei insbesondere auch eine Freigabe von Zugriffsberechtigungen in einem Automatisierungssystem. Auf einem Speichermedium befindliche Daten können beispielsweise zur Visualisierung von Prozessabbildern dienen und folgende Aspekte umfassen:
- Projektierung von Anzeigeelementen, die einerseits auf lokalen Daten und andererseits auf Daten zugeordneter Automatisierungsgeräte basieren,
- Alarmverwaltung, die Alarme zugeordneter Automatisierungsgeräte in bearbeitbarer bzw. quittierbarer Weise umfasst,
- Messdatenverwaltung, die beispielsweise auch eine Darstellung von Berichten oder sich abzeichnenden Trends aus zugeordneten Automatisierungsgeräten umfasst,
- Benutzerverwaltung, die eine Zugriffsrechtedefinition für zugeordnete Automatisierungsgeräte umfasst, insbesondere eine Zugriffsrechteeinschränkung auf ausgewählte Automatisierungsgeräte,
- Rezeptverwaltung, die eine Erstellung und Speicherung von Rezepten sowie deren selektive Bereitstellung an ausgewählten Bedien- und Beobachtungsstationen ermöglicht.

Ein computerbasiertes Objekt kann außerdem einem Rechenprozesss zugeordnet sein, der sämtliche Einheiten eines in einen Arbeitsspeicher geladenen ausführbaren Programms umfasst. Unter einem Rechner sind beispielsweise PCs, Notebooks, Server, Tablets, Smartphones sowie Steuerungs- und Regelungsmodule, Sensoren oder Aktoren in der Automatisierungs-, Fahrzeug-, Kommunikations- oder Medizintechnik zu verstehen - allgemein Einrichtungen, in denen Computerprogramme ablaufen.

Erfindungsgemäß werden den Objekten zugeordnete Mess- bzw. Zustandsgrößen mittels Sensoren bzw. Beobachtersystemen ermittelt und ereignisabhängig bzw. innerhalb vorgebbarer Zeitintervalle durch zumindest eine Steuerungseinrichtung erfasst. Die Objekte werden zumindest an einer graphischen Benutzerschnittstelle einer mit der Steuerungseinrichtung verbundenen Bedien- und Beobachtungsstation dargestellt. Bei Erfüllung von für ausgewählte Mess- bzw. Zustandsgrößen spezifizierten Bedingungen werden individuell oder aggregiert durch die Steuerungseinrichtung Alarmstatusinformationen umfassende Alarme erzeugt. Vorzugsweise werden die computerbasierten Objekte und die ihnen zugeordneten Mess- oder Zustandsgrößen durch die Steuerungseinrichtung zu einem Prozessabbild aggregiert, das durch die Steuerungseinrichtung laufend aktualisiert wird.

Die Alarme werden erfindungsgemäß innerhalb eines allgemeinen Alarmanzeigebereichs der graphischen Benutzerschnittstelle der Bedien- und Beobachtungsstation dargestellt. Für durch eine benutzerindividuelle Auswahl über die graphische Benutzerschnittstelle vorgegebener Objekte, Objektattribute bzw. Objektgruppen werden Alarmstatusinformationen von der Steuerungseinrichtung abgefragt und innerhalb eines benutzerindividuellen Alarmanzeigebereichs dargestellt. Bei benutzerseitiger Bestätigung eines innerhalb des benutzerindividuellen Alarmanzeigebereichs dargestellten Alarms erfolgt jeweils eine Darstellung alarmgebender Objekte oder Objektgruppen an der graphischen Benutzerschnittstelle. Die innerhalb des benutzerindividuellen Alarmanzeigebereichs dargestellten Alarmstatusinformationen werden vorteilhafterweise nur für Benutzer von der Steuerungseinrichtung abgefragt, die an der Bedien- und Beobachtungsstation tatsächlich angemeldet sind.

Mit der vorliegenden Erfindung sind Operatoren in der Lage, individualisierte Gruppenalarme zusammenstellen zu können, die sich hinsichtlich zu überwachender Objekte an jeweiligen Beobachtungschwerpunkten der Operatoren orientieren und zur Laufzeit anpassbar sind. Darüber hinaus erfolgt durch Abfrage bereits bestehender Alarmstatusinformationen für die benutzerindividuell zu überwachenden Objekte, Objektattribute bzw. Objektgruppen keine zusätzliche Belastung alarmerzeugender bzw. -verarbeitender Komponenten des Prozessleitsystems. Außerdem bietet die vorliegende Erfindung eine effiziente Alarmbehandlung, indem ein Operator durch Bestätigung eines innerhalb des benutzerindividuellen Alarmanzeigebereichs dargestellten Alarms visuell direkt zur jeweiligen Alarmquelle geleitet wird.

Entsprechend einer bevorzugten Ausgestaltung der vorliegenden Erfindung werden die computerbasierten Objekte in zumindest einer Datenbank eines Engineering-Systems persistent gespeichert und mittels des Engineering-Systems verwaltet. Dabei werden mittels des Engineering-Systems auch die für die ausgewählten Mess- bzw. Zustandsgrößen spezifizierten Bedingungen zur Erzeugung der Alarme vorgegeben. Dies ermöglicht eine zu Prozessobjekten konsistente Spezifikation von Alarmbedingungen und Alarmbehandlungsmaßnahmen.

Die benutzerindividuelle Auswahl der Objekte, Objektattribute bzw. Objektgruppen, für die Alarmstatusinformationen von der Steuerungseinrichtung abgefragt werden, wird vorteilhafterweise durch eine benutzerseitige Selektion an der graphischen Benutzerschnittstelle vorgegeben. Dabei kann die benutzerseitige Selektion beispielsweise eine Auswahl von Anlagenplänen, Anlagenplanausschnitten, Objektattributen, Objektgruppen bzw. einzelner Objekte als Alarmquellen umfassen. Dies ermöglicht eine besonders benutzerfreundliche und zuverlässige Definition zu überwachender Alarmquellen. Insbesondere können Objektattribute, Objektgruppen bzw. Objekte innerhalb eines an der graphischen Benutzerschnittstelle dargestellten Anlagenplans oder Anlagenplanausschnitts ausgewählt werden, während Anlagenpläne bzw. Anlagenplanausschnitte beispielsweise innerhalb einer an der graphischen Benutzerschnittstelle dargestellten Anlagenplanhierarchie ausgewählt werden. Dies ermöglicht eine auf unterschiedliche Arten von Alarmquellen abgestimmte effiziente und schnelle Erfassung der jeweiligen Alarmquelle.

Entsprechend einer besonders bevorzugten Ausgestaltung der vorliegenden Erfindung werden die abgefragten Alarmstatusinformationen für die von der Auswahl eines Anlagenplans, eines Anlagenplanausschnitts bzw. einer Objektgruppe umfassten Objekte oder Objektattribute entsprechend einer vorgebbaren Gewichtung oder Priorisierung jeweils zu einem Alarm aggregiert, der innerhalb des benutzerindividuellen Alarmanzeigebereichs dargestellt wird. Auf dieser Grundlage kann nach einer benutzerseitigen Bestätigung eines Alarms jeweils ein Anlagenplan, Anlagenplanausschnitt oder Benutzerschnittstellenelement mit dem Objektattribut, der Objektgruppe oder dem Objekt hervorgehoben dargestellt werden, die bzw. das innerhalb einer Aggregierung eine höchste Gewichtung oder Priorität aufweist. Damit kann sich ein Operator auf eine Behandlung besonders kritischer Ereignisse konzentrieren. Bei gleichzeitigem Vorliegen mehrerer Alarme innerhalb des benutzerindividuellen Alarmanzeigebereichs kann insbesondere der Alarm priorisiert werden, der unbestätigt ist und eine höchste Priorisierung bzw. einen neuesten Erzeugungszeitstempel aufweist.

Das erfindungsgemäße Prozessleitsystem ist zur Durchführung eines Verfahrens entsprechend vorangehenden Ausführungen vorgesehen und umfasst zumindest eine Bedien- und Beobachtungsstation sowie zumindest eine Steuerungseinrichtung. Das Prozessleitsystem ist dafür ausgestaltet und eingerichtet, dass Komponenten eines industriellen Prozessautomatisierungssystems durch computerbasierte Objekte repräsentiert werden. Dabei werden die Objekte innerhalb einer hierarchischen Objektstruktur verwaltet, die Abhängigkeiten zwischen Objekten umfasst.

Die Steuerungseinrichtung des erfindungsgemäßen Prozessleitsystems ist dafür ausgestaltet und eingerichtet, dass den Objekten zugeordnete, mittels Sensoren bzw. Beobachtersystemen ermittelte Mess- bzw. Zustandsgrößen ereignisabhängig bzw. innerhalb vorgebbarer Zeitintervalle erfasst werden. Die Bedien- und Beobachtungsstation ist mit der Steuerungseinrichtung verbunden und umfasst eine graphische Benutzerschnittstelle zur Darstellung der Objekte. Zusätzlich ist die Steuerungseinrichtung dafür ausgestaltet und eingerichtet, bei Erfüllung von für ausgewählte Mess- bzw. Zustandsgrößen spezifizierten Bedingungen individuell oder aggregiert Alarmstatusinformationen umfassende Alarme zu erzeugen. Dementsprechend ist die graphische Benutzerschnittstelle dafür ausgestaltet und eingerichtet, die Alarme innerhalb eines allgemeinen Alarmanzeigebereichs darzustellen. Vorzugsweise ist die Steuerungseinrichtung zusätzlich dafür ausgestaltet und eingerichtet, die computerbasierten Objekte und die ihnen zugeordneten Mess- oder Zustandsgrößen zu einem Prozessabbild zu aggregieren und das Prozessabbild laufend zu aktualisieren.

Darüber hinaus ist die Bedien- und Beobachtungsstation des erfindungsgemäßen Prozessleitsystems dafür ausgestaltet und eingerichtet, für durch eine benutzerindividuelle Auswahl über die graphische Benutzerschnittstelle vorgegebener Objekte, Objektattribute bzw. Objektgruppen Alarmstatusinformationen von der Steuerungseinrichtung abzufragen und innerhalb eines benutzerindividuellen Alarmanzeigebereichs der graphischen Benutzerschnittstelle darzustellen. Schließlich ist die Bedien- und Beobachtungsstation ferner dafür ausgestaltet und eingerichtet, dass bei benutzerseitiger Bestätigung eines innerhalb des benutzerindividuellen Alarmanzeigebereichs dargestellten Alarms jeweils eine Darstellung alarmgebender Objektattribute, Objekte oder Objektgruppen an der graphischen Benutzerschnittstelle erfolgt.

Vorzugsweise umfasst das Prozessleitsystem zusätzlich ein Engineering-System, das dafür ausgestaltet und eingerichtet ist, die computerbasierten Objekte in einer Datenbank des Engineering-Systems persistent zu speichern, die Objekte zu verwalten und die für die ausgewählten Mess- bzw. Zustandsgrößen spezifizierten Bedingungen zur Erzeugung der Alarme vorzugeben. Auf diese Weise können Spezifikation von Alarmbedingungen und Alarmbehandlungsmaßnahmen effizient zu Prozessobjekten konsistent gehalten.

Die vorliegende Erfindung wird nachfolgend an einem Ausführungsbeispiel anhand der Zeichnung näher erläutert. Es zeigt
- Figur 1: eine graphischen Benutzerschnittstelle einer Bedienund Beobachtungsstation während einer benutzerindividuellen Auswahl einer Komponente eines Prozessautomatisierungssystems, für die Alarmstatusinformationen abgefragt und innerhalb eines benutzerindividuellen Alarmanzeigebereichs dargestellt werden sollen,
- Figur 2: die graphischen Benutzerschnittstelle während einer Auswahl zusätzlicher Komponenten, für die Alarmstatusinformationen abgefragt werden sollen,
- Figur 3: die graphischen Benutzerschnittstelle während einer Auswahl eines Anlagenplanausschnitts, für den Alarmstatusinformationen abgefragt werden sollen,
- Figur 4: die graphischen Benutzerschnittstelle mit der gemäß Figur 1 ausgewählten Komponente und mit dem gemäß Figur 3 gewählten Anlagenplanausschnitt,
- Figur 5: die graphischen Benutzerschnittstelle nach Bestätigung eines Alarms für den gemäß Figur 3 gewählten Anlagenplanausschnitt,
- Figur 6: eine schematische Darstellung eines Prozessleitsystem zur Überwachung von Alarmen in einem Prozessautomatisierungssystem.

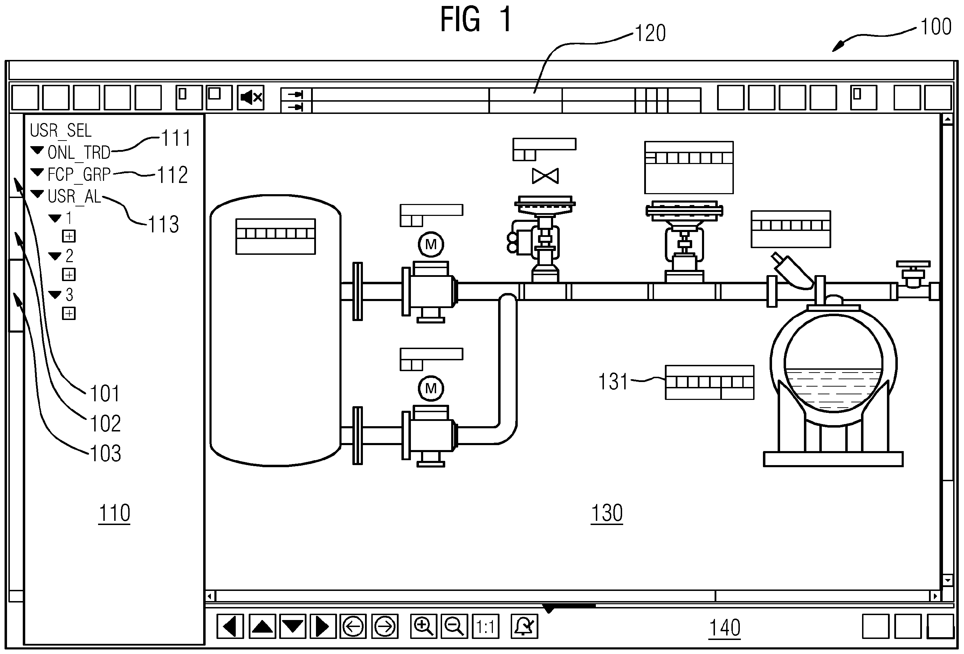

Entsprechend Figur 1 werden Komponenten eines industriellen Prozessautomatisierungssystems repräsentierende computerbasierte Objekte an einer graphischen Benutzerschnittstelle einer von einem Prozessleitsystem umfassten Bedien- und Beobachtungsstation 100 zwei- oder dreidimensional dargestellt. Die graphische Benutzerschnittstelle umfasst einen Anwenderselektionsbereich 110, einen allgemeinen Alarmanzeigebereich 120, einen Anlagenplananzeigebereich 130 und ein Operator-Panel 140. Im Anlagenplananzeigebereich 130 kann beispielsweise ein Anlagenbild mit graphischen Repräsentationen von Rohrleitungen und Prozessobjekten, wie Tanks, Kessel, Pumpen, Ventile oder Durchflussmesser, dargestellt werden. Über das Operator-Panel 140 werden insbesondere Zoom- und Bildnavigationsfunktionen in Bezug auf den Anlagenplananzeigebereich 130 bereitgestellt. Außerdem umfasst das Operator-Panel 140 einen benutzerindividuellen Alarmanzeigebereich 141, in dem benutzerindividuell konfigurierbare Alarme dargestellt werden können.

Der Anwenderselektionsbereich 110 umfasst einen Planauswahlabschnitt 101, einen Equipment-Auswahlabschnitt 102 und einen Anwenderselektionsabschnitt 103, zu denen im vorliegenden Ausführungsbeispiel jeweils mittels eines entsprechenden Tabs navigiert werden kann. Der Planauswahlabschnitt 101 umfasst eine hierarchische Auflistung sämtlicher Anlagenpläne und Anlagenplanausschnitte, die dem Prozessautomatisierungssystem zugeordnet sind. Mittels des Anwenderselektionsabschnitts 103 werden benutzerspezifische Einstellungen für Online-Trends 111 zu überwachten Mess- bzw. Zustandsgrößen, für Faceplate-Gruppen 112 mit Typschild-ähnlichen Benutzerschnittstellenelementen und für individuell konfigurierbare Alarmgruppen 113 verfügbar gemacht. Im vorliegenden Ausführungsbeispiel sind 3 Alarmgruppen bzw. Alarme individuell pro Bedienperson konfigurierbar.

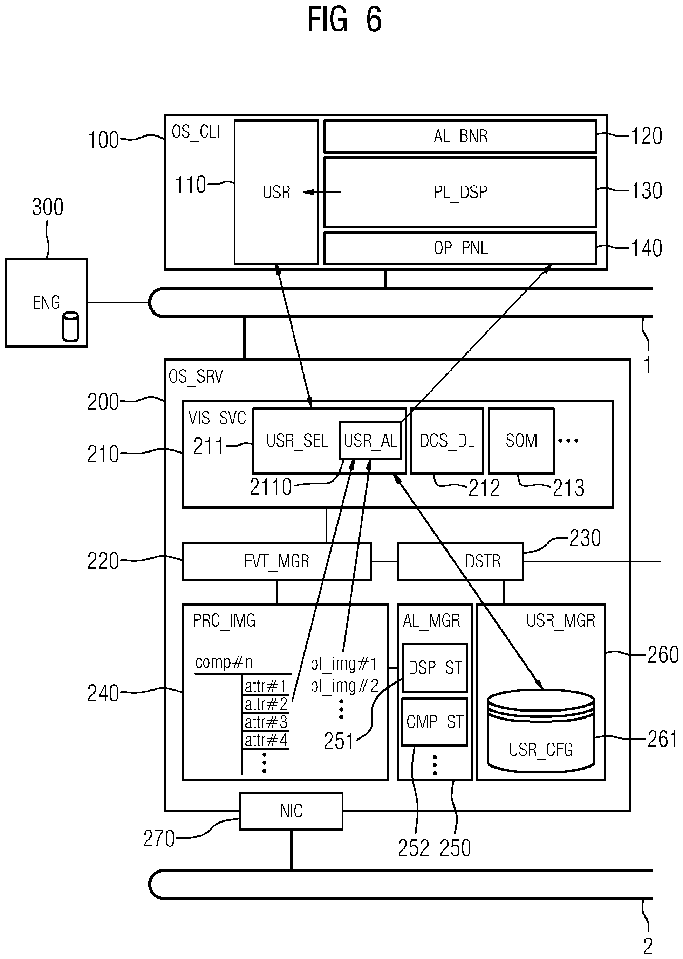

Die Objekte werden mittels eines in Figur 6 dargestellten Engineering-Systems 300 verwaltet, das dem Prozessleitsystem zugeordnet ist, und insbesondere in einer Datenbank des Engineering-Systems 300 persistent gespeichert. Dabei werden die Objekte innerhalb einer hierarchischen Objektstruktur verwaltet, die Abhängigkeiten zwischen den Objekten umfasst. Den Objekten zugeordnete Mess- bzw. Zustandsgrößen werden mittels Sensoren bzw. Beobachtersystemen ermittelt und ereignisabhängig bzw. innerhalb vorgebbarer Zeitintervalle durch eine mit der Bedien- und Beobachtungsstation 100 verbundene Steuerungseinrichtung 200 erfasst. Dabei sind die Bedien- und Beobachtungsstation 100, die Steuerungseinrichtung 200 und das Engineering-System 300 über ein Ethernet- bzw. IP-basiertes Kommunikationsnetz 1 miteinander verbunden, während die Steuerungseinrichtung 200 im vorliegenden Ausführungsbeispiel über ein Feldbus-System 2 mit Sensoren und Aktoren des Prozessautomatisierungssystems verbunden ist. Die Sensoren und Aktoren sind an einen insbesondere mittels der Bedien- und Beobachtungsstationsstation 100 und mittels der Steuerungseinrichtung 200 gesteuerten bzw. geregelten technischen Prozess angebunden. Außerdem umfasst die Steuerungseinrichtung 200 eine spezielle Netzwerkkarte 270 für das Feldbus-System 2.

Die Steuerungseinrichtung 200 umfasst entsprechend Figur 6 eine Visualisierungsdienstkomponente 210, durch die eine Darstellung der Objekte innerhalb des Anlagenplananzeigebereichs 130 der graphischen Benutzerschnittstelle der Bedien- und Beobachtungsstation 100 gesteuert wird. Die Objekte und die ihnen zugeordneten Mess- oder Zustandsgrößen werden durch die Steuerungseinrichtung 200 zu einem Prozessabbild aggregiert, das durch die Steuerungseinrichtung 200 laufend aktualisiert wird. Hierfür umfasst die Steuerungseinrichtung 200 eine Prozessabbildkomponente 240, die über eine Event-Management-Komponente 220 der Steuerungseinrichtung 220 Änderungen des Prozessabbilds an die Visualisierungsdienstkomponente 210 meldet.

Bei Erfüllung von für ausgewählte Mess- bzw. Zustandsgrößen spezifizierten Bedingungen werden mittels einer Alarm-Management-Komponente 250 der Steuerungseinrichtung 200 individuell oder aggregiert Alarmstatusinformationen umfassende Alarme erzeugt. Dabei greift die Alarm-Management-Komponente 250 auf das durch die Prozessabbildkomponente 240 laufend aktualisierte Prozessabbild zu. Die Alarme werden innerhalb des allgemeinen Alarmanzeigebereichs 120 der graphischen Benutzerschnittstelle der Bedien- und Beobachtungsstation 100 dargestellt. Hierzu umfasst die Alarm-Management-Komponente 250 im vorliegenden Ausführungsbeispiel einerseits eine Display-Status-Überwachungseinheit 251, die jeweils einen aktuellen Alarmanzeigestatus der graphischen Benutzerschnittstelle erfasst, und andererseits eine Komponenten-Status-Überwachungseinheit 252, die alarmrelevante Änderungen des Prozessabbilds erfasst. Auf dieser Grundlage meldet die Alarm-Management-Komponente 250 zu signalisierende Alarme über die Event-Management-Komponente 220 an die Visualisierungsdienstkomponente 220. Dementsprechend steuert die Visualisierungsdienstkomponente 210 eine Signalisierung der Alarme an der graphischen Benutzerschnittstelle der Bedien- und Beobachtungsstation 100. Die für die ausgewählten Mess- bzw. Zustandsgrößen spezifizierten Bedingungen zur Erzeugung der Alarme werden vorzugsweise mittels des Engineering-Systems 300 vorgegeben.

Für durch eine benutzerindividuelle Auswahl über die graphische Benutzerschnittstelle vorgegebener Objekte, Objektattribute bzw. Objektgruppen werden Alarmstatusinformationen von der Steuerungseinrichtung 200 abgefragt und innerhalb des benutzerindividuellen Alarmanzeigebereichs 141 dargestellt. Im vorliegenden Ausführungsbeispiel können innerhalb des Anwenderselektionsabschnitts 103 über Plus-Schaltflächen, die den benutzerspezifischen Einstellungen für individuell konfigurierbare Alarmgruppen 113 zugeordnet sind, Alarmquellen hinzugefügt werden.

Die benutzerindividuelle Auswahl der Objekte, Objektattribute bzw. Objektgruppen, für die Alarmstatusinformationen von der Steuerungseinrichtung 200 abgefragt werden, wird vorzugsweise durch eine benutzerseitige Selektion an der graphischen Benutzerschnittstelle vorgegeben. Dabei kann die benutzerseitige Selektion eine Auswahl von Anlagenplänen, Anlagenplanausschnitten, Objektattributen, Objektgruppen bzw. einzelner Objekte als Alarmquellen umfassen. Objektattribute, Objektgruppen bzw. Objekte werden beispielsweise innerhalb eines im Anlagenplananzeigebereich 130 der graphischen Benutzerschnittstelle dargestellten Anlagenplans oder Anlagenplanausschnitts ausgewählt. Entsprechend Figur 1 wird im Anlagenplananzeigebereich 130 ein neben einem Tank visualisierter Füllstand 131 des Tanks ausgewählt.

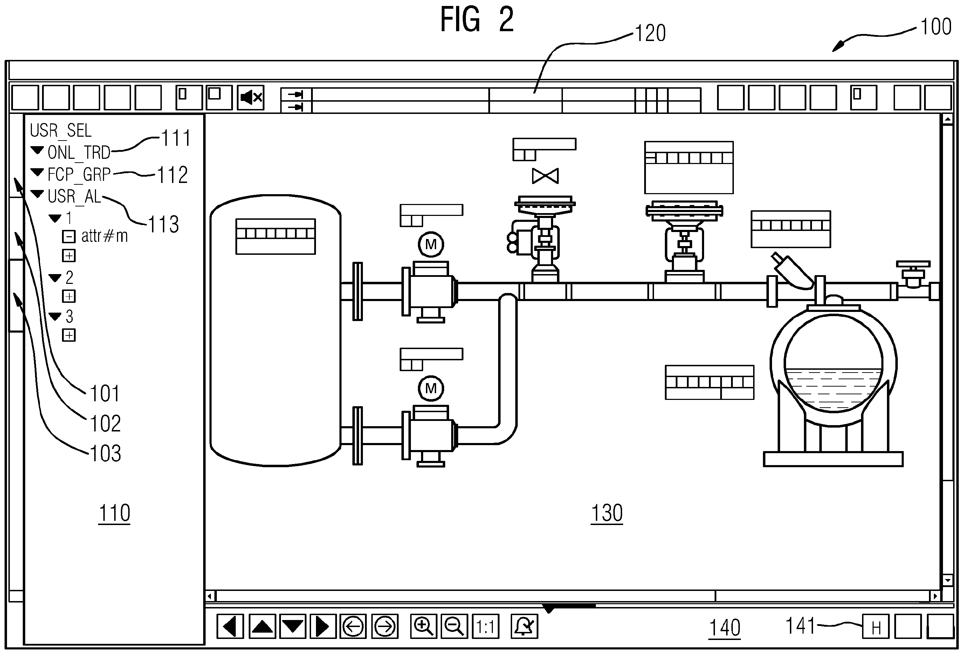

Nach Auswahl des Füllstands des Tanks wird dieser entsprechend Figur 2 als Alarmquelle in eine erste Alarmgruppe innerhalb der benutzerspezifischen Einstellungen für individuell konfigurierbare Alarmgruppen 113 übernommen. Im vorliegenden Ausführungsbeispiel wird innerhalb des benutzerindividuellen Alarmanzeigebereichs 141 nach Auswahl des Füllstands des Tanks als Alarmquelle für die erste Alarmgruppe ein Alarmstatus "H" (high) angezeigt, der jeweils vom Füllstand des Tanks abhängig ist. Grundsätzlich können innerhalb des Anwenderselektionsabschnitts 103 über Minus-Schaltflächen, die den benutzerspezifischen Einstellungen für individuell konfigurierbare Alarmgruppen 113 zugeordnet sind, hinzugefügte Alarmquellen wieder gelöscht werden. Durch Betätigung einer Plus-Schaltfläche unterhalb der zuvor hinzugefügten Alarmquelle wird nachfolgend eine weitere Alarmquelle zur ersten Alarmgruppe innerhalb der benutzerspezifischen Einstellungen für individuell konfigurierbare Alarmgruppen 113 hinzugefügt.

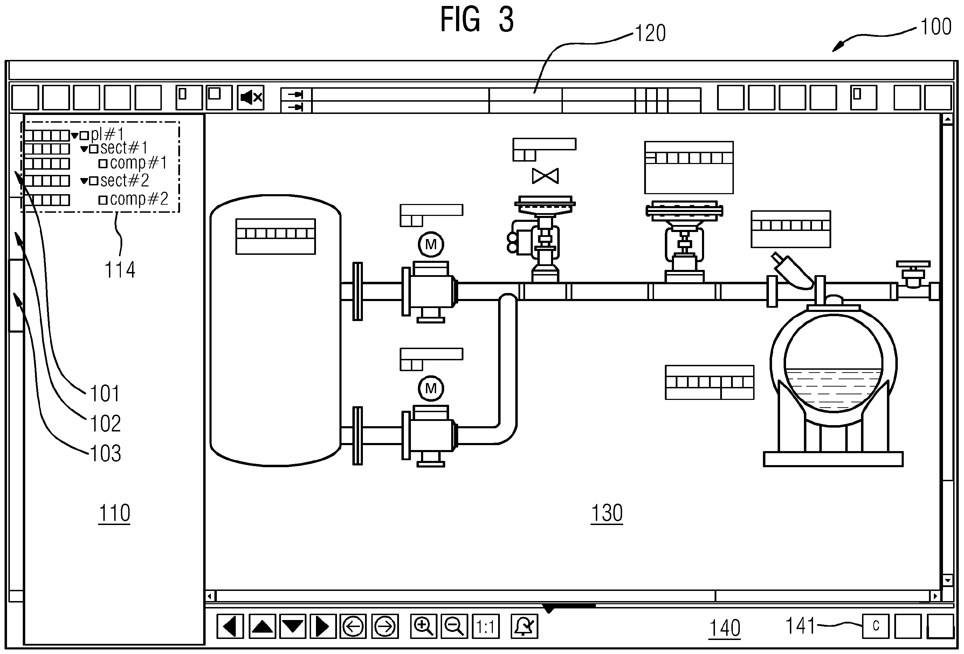

Als weitere Alarmquelle wird entsprechend Figur 3 nach Betätigung des Tabs für den Planauswahlabschnitt 101 innerhalb einer im Anwenderselektionsbereich 110 dargestellten Anlagenplanhierarchie 114 ein erster Anlagenplanausschnitt ausgewählt, dem bereits ein Alarmstatus "C" (critical) zugeordnet ist. Grundsätzlich können innerhalb der Anlagenplanhierarchie 114 Anlagenpläne, Anlagenplanausschnitte bzw. Pläne von Anlagenkomponenten als Alarmquellen ausgewählt werden.

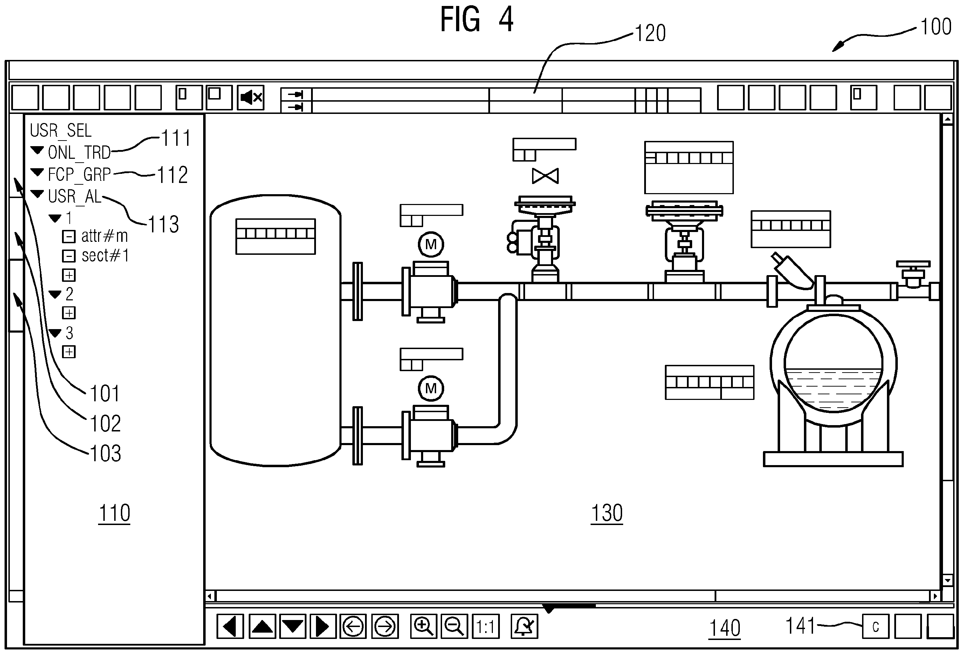

Nach Auswahl des ersten Anlagenplanausschnitts wird dieser entsprechend Figur 4 als weitere Alarmquelle in die erste Alarmgruppe innerhalb der benutzerspezifischen Einstellungen für individuell konfigurierbare Alarmgruppen 113 übernommen. Da der Alarmstatus "C" des ersten Anlagenplanausschnitts gegenüber dem Alarmstatus "H" des Füllstands des Tanks im vorliegenden Ausführungsbeispiel eine höhere Priorität aufweist, wird innerhalb des benutzerindividuellen Alarmanzeigebereichs 141 nach Auswahl des ersten Anlagenplanausschnitts als weitere Alarmquelle für die erste Alarmgruppe insgesamt der Alarmstatus "C" angezeigt. Die abgefragten Alarmstatusinformationen für die von der Auswahl eines Anlagenplans, eines Anlagenplanausschnitts bzw. einer Objektgruppe umfassten Objekte oder Objektattribute können beispielsweise entsprechend einer vorgebbaren Gewichtung oder Priorisierung jeweils zu einem Alarm aggregiert, der innerhalb des benutzerindividuellen Alarmanzeigebereichs 141 dargestellt wird.

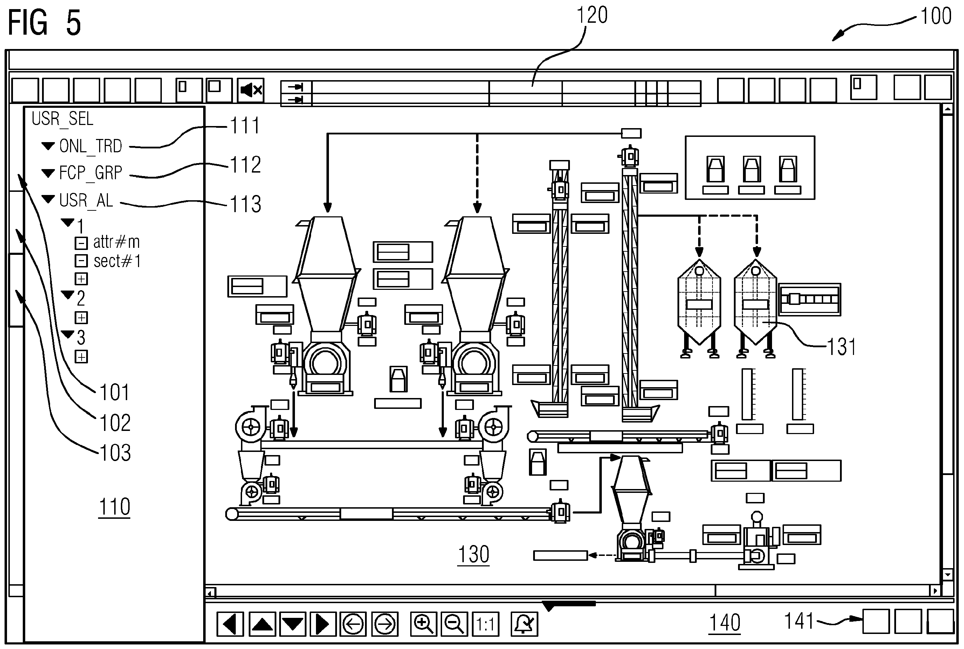

Bei benutzerseitiger Bestätigung eines innerhalb des benutzerindividuellen Alarmanzeigebereichs 141 dargestellten Alarms erfolgt jeweils eine Darstellung alarmgebender Objektattribute, Objekte oder Objektgruppen an der graphischen Benutzerschnittstelle. Entsprechend Figur 5 wird im vorliegenden Ausführungsbeispiel nach der benutzerseitigen Bestätigung der zuvor als Alarmquelle ausgewählte erste Anlagenplanausschnitt im Anlagenplananzeigebereich 130 dargestellt. Grundsätzlich kann nach einer benutzerseitigen Bestätigung eines Alarms jeweils ein Anlagenplan, Anlagenplanausschnitt oder Benutzerschnittstellenelement mit dem Objektattribut, der Objektgruppe oder dem Objekt hervorgehoben dargestellt werden, die bzw. das innerhalb einer Aggregierung eine höchste Gewichtung oder Priorität aufweist. Bei gleichzeitigem Vorliegen mehrerer Alarme wird innerhalb des benutzerindividuellen Alarmanzeigebereichs 141 vorzugsweise der Alarm priorisiert, der unbestätigt ist und eine höchste Priorisierung bzw. einen neuesten Erzeugungszeitstempel aufweist. Vorteilhafterweise werden die innerhalb des benutzerindividuellen Alarmanzeigebereichs 141 dargestellten Alarmstatusinformationen nur für Benutzer von der Steuerungseinrichtung 200 abgefragt, die an der Bedien- und Beobachtungsstation 100 angemeldet sind.

Entsprechend Figur 6 umfasst die Visualisierungsdienstkomponente 210 eine Anwenderselektionseinheit 211, die innerhalb des Anwenderselektionsbereichs 110 an der graphischen Benutzerschnittstelle der Bedien- und Beobachtungsstation 100 vorgenommene benutzerspezifische Einstellungen erfasst und in einer Datenbank 261 einer Benutzerverwaltungskomponente 260 der Steuerungseinrichtung 200 persistiert. Dabei ist die Benutzerverwaltungskomponente 260 über eine Verteilerkomponente 230 mit der Event-Management-Komponente 220 der Steuerungseinrichtung 200 gekoppelt. Auf diese Weise können die benutzerspezifischen Einstellungen bei Anmeldung eines Benutzers an der Bedien- und Beobachtungsstation 100 über die Event-Management-Komponente 220 aus der Datenbank 261 abgerufen und durch die Visualisierungsdienstkomponente 210 zur Steuerung der Darstellung der Objekte an der graphischen Benutzerschnittstelle der Bedien- und Beobachtungsstation 100 verwendet werden. Zur Erfassung der über den Anwenderselektionsbereich 110 der graphischen Benutzerschnittstelle der Bedien- und Beobachtungsstation 100 individuell konfigurierbaren Alarmgruppen verfügt die Anwenderselektionseinheit 211 über ein spezielles Alarmgruppenmodul 2110. Dieses Alarmgruppenmodul 2110 steuert auch eine Darstellung der von der Steuerungseinrichtung 200 abgefragten Alarmstatusinformationen innerhalb des Operator-Panels 140 der Bedien- und Beobachtungsstation.

Darüber hinaus umfasst die Visualisierungsdienstkomponente 210 neben der Anwenderselektionseinheit 211 eine Steuerungseinheit 212 (Distributed Control System Domain Logic) zur Anpassung an der graphischen Benutzerschnittstelle der Bedien- und Beobachtungsstation 100 dazustellender verfahrenstechnischer Symbole, insbesondere Blocksymbole und Faceplates, in Anlagenplänen und Anlagenplanausschnitten an einen jeweiligen Betriebszustand bzw. an aktuelle Mess- und Zustandszugrößen. Dabei greift diese Steuerungseinheit 212 auf einen aktuellen Visualisierungszustand der graphischen Benutzerschnittstelle der Bedien- und Beobachtungsstation 100. Der Visualisierungszustand umfasst insbesondere Informationen über geöffnete Anlagenpläne, geöffnete Fenster und Inhalte sowie getätigte Benutzereingaben und wird durch eine Bildschirmobjekt-Management-Einheit 213 (Screen Object Model) erfasst. Damit dynamisiert die Steuerungseinheit 212 nur eine Visualisierung tatsächlich an der graphischen Benutzerschnittstelle der Bedien- und Beobachtungsstation 100 dargestellter verfahrenstechnischer Symbole. Darüber hinaus wird der jeweilige Visualisierungszustand durch die Visualisierungsdienstkomponente 210 in der Datenbank 261 der Benutzerverwaltungskomponente 260 persistiert. Somit kann ein zuletzt aktiver Visualisierungszustand einer Bedienperson nach einem erneuten Einloggen wiederhergestellt werden.

## Patentansprüche

1. Verfahren zur Überwachung von Alarmen in einem Prozessautomatisierungssystem, bei dem
- Komponenten des Prozessautomatisierungssystems durch computerbasierte Objekte repräsentiert werden, wobei die Objekte innerhalb einer hierarchischen Objektstruktur verwaltet werden, die Abhängigkeiten zwischen Objekten umfasst,
- den Objekten zugeordnete Mess- und/oder Zustandsgrößen mittels Sensoren und/oder Beobachtersystemen ermittelt und ereignisabhängig und/oder innerhalb vorgebbarer Zeitintervalle durch eine Steuerungseinrichtung (200) erfasst werden,
- die Objekte an einer graphischen Benutzerschnittstelle einer mit der Steuerungseinrichtung (200) verbundenen Bedien- und Beobachtungsstation (100) dargestellt werden,
- bei Erfüllung von für ausgewählte Mess- und/oder Zustandsgrößen spezifizierten Bedingungen individuell oder aggregiert durch die Steuerungseinrichtung (200) Alarmstatusinformationen umfassende Alarme erzeugt werden,
- die Alarme innerhalb eines allgemeinen Alarmanzeigebereichs (120) der graphischen Benutzerschnittstelle der Bedien- und Beobachtungsstation (100) dargestellt werden,
- für durch eine benutzerindividuelle Auswahl über die graphische Benutzerschnittstelle vorgegebener Objekte, Objektattribute und/oder Objektgruppen (131) Alarmstatusinformationen von der Steuerungseinrichtung (200) abgefragt und innerhalb eines benutzerindividuellen Alarmanzeigebereichs (141) dargestellt werden,
- bei benutzerseitiger Bestätigung eines innerhalb des benutzerindividuellen Alarmanzeigebereichs (141) dargestellten Alarms jeweils eine Darstellung alarmgebender Objekte, Objektattribute oder Objektgruppen an der graphischen Benutzerschnittstelle erfolgt.

2. Verfahren nach Anspruch 1,
bei dem die computerbasierten Objekte in zumindest einer Datenbank eines Engineering-Systems (300) persistent gespeichert werden, bei dem die Objekte mittels des Engineering-Systems verwaltet werden und bei dem die für die ausgewählten Mess- und/oder Zustandsgrößen spezifizierten Bedingungen zur Erzeugung der Alarme mittels des Engineering-Systems vorgegeben werden.

3. Verfahren nach einem der Ansprüche 1 oder 2,
bei dem die computerbasierten Objekte und die ihnen zugeordneten Mess- oder Zustandsgrößen durch die Steuerungseinrichtung (200, 240) zu einem Prozessabbild aggregiert werden, das durch die Steuerungseinrichtung laufend aktualisiert wird.

4. Verfahren nach einen der Ansprüche 1 bis 3,
bei dem die benutzerindividuelle Auswahl der Objekte, Objektattribute und/oder Objektgruppen, für die Alarmstatusinformationen von der Steuerungseinrichtung (200) abgefragt werden, durch eine benutzerseitige Selektion an der graphischen Benutzerschnittstelle vorgegeben wird.

5. Verfahren nach Anspruch 4,
bei dem die benutzerseitige Selektion eine Auswahl von Anlagenplänen, Anlagenplanausschnitten, Objektattributen, Objektgruppen und/oder einzelner Objekte als Alarmquellen umfasst.

6. Verfahren nach Anspruch 5,
bei dem Objektattribute, Objektgruppen und/oder Objekte innerhalb eines an der graphischen Benutzerschnittstelle dargestellten Anlagenplans oder Anlagenplanausschnitts ausgewählt werden und bei dem Anlagenpläne und/oder Anlagenplanausschnitte innerhalb einer an der graphischen Benutzerschnittstelle dargestellten Anlagenplanhierarchie ausgewählt werden.

7. Verfahren nach einem der Ansprüche 5 oder 6,
bei dem die abgefragten Alarmstatusinformationen für die von der Auswahl eines Anlagenplans, eines Anlagenplanausschnitts und/oder einer Objektgruppe umfassten Objekte oder Objektattribute entsprechend einer vorgebbaren Gewichtung oder Priorisierung jeweils zu einem Alarm aggregiert werden, der innerhalb des benutzerindividuellen Alarmanzeigebereichs dargestellt wird.

8. Verfahren nach Anspruch 7,
bei dem nach einer benutzerseitigen Bestätigung eines Alarms jeweils ein Anlagenplan, Anlagenplanausschnitt oder Benutzerschnittstellenelement mit dem Objektattribut, der Objektgruppe oder dem Objekt hervorgehoben dargestellt wird, die/das innerhalb einer Aggregierung eine höchste Gewichtung oder Priorität aufweist.

9. Verfahren nach einem der Ansprüche 1 bis 8,
bei dem bei gleichzeitigem Vorliegen mehrerer Alarme innerhalb des benutzerindividuellen Alarmanzeigebereichs der Alarm priorisiert wird, der unbestätigt ist und eine höchste Priorisierung und/oder einen neuesten Erzeugungszeitstempel aufweist.

10. Verfahren nach einem der Ansprüche 1 bis 9,
bei dem die innerhalb des benutzerindividuellen Alarmanzeigebereichs dargestellten Alarmstatusinformationen nur für Benutzer von der Steuerungseinrichtung abgefragt werden, die an der Bedien- und Beobachtungsstation angemeldet sind.

11. Prozessleitsystem zur Durchführung eines Verfahrens nach einem der Ansprüche 1 bis 10 mit
- zumindest einer Bedien- und Beobachtungsstation (100),
- zumindest einer Steuerungseinrichtung (200),
- wobei das Prozessleitsystem dafür ausgestaltet und eingerichtet ist, dass Komponenten eines Prozessautomatisierungssystems durch computerbasierte Objekte repräsentiert werden, wobei die Objekte innerhalb einer hierarchischen Objektstruktur verwaltet werden, die Abhängigkeiten zwischen Objekten umfasst,
- wobei die Steuerungseinrichtung (200) dafür ausgestaltet und eingerichtet ist, dass den Objekten zugeordnete, mittels Sensoren und/oder Beobachtersystemen ermittelte Mess- und/oder Zustandsgrößen ereignisabhängig und/oder innerhalb vorgebbarer Zeitintervalle erfasst werden,
- wobei die Bedien- und Beobachtungsstation (100) mit der Steuerungseinrichtung (200) verbunden ist und eine graphische Benutzerschnittstelle zur Darstellung der Objekte umfasst,
- wobei die Steuerungseinrichtung (200) ferner dafür ausgestaltet und eingerichtet ist, bei Erfüllung von für ausgewählte Mess- und/oder Zustandsgrößen spezifizierten Bedingungen individuell oder aggregiert Alarmstatusinformationen umfassende Alarme zu erzeugen,
- wobei die graphische Benutzerschnittstelle (100) dafür ausgestaltet und eingerichtet ist, die Alarme innerhalb eines allgemeinen Alarmanzeigebereichs (120) darzustellen,
- wobei die Bedien- und Beobachtungsstation (100) dafür ausgestaltet und eingerichtet ist, für durch eine benutzerindividuelle Auswahl über die graphische Benutzerschnittstelle vorgegebener Objekte, Objektattribute und/oder Objektgruppen (131) Alarmstatusinformationen von der Steuerungseinrichtung (200) abzufragen und innerhalb eines benutzerindividuellen Alarmanzeigebereichs (141) der graphischen Benutzerschnittstelle darzustellen,
- wobei die Bedien- und Beobachtungsstation (100) ferner dafür ausgestaltet und eingerichtet ist, dass bei benutzerseitiger Bestätigung eines innerhalb des benutzerindividuellen Alarmanzeigebereichs (141) dargestellten Alarms jeweils eine Darstellung alarmgebender Objektattribute, Objekte oder Objektgruppen an der graphischen Benutzerschnittstelle erfolgt.

12. Prozessleitsystem nach Anspruch 11,
bei dem zusätzlich ein Engineering-System (300) vorgesehen ist und bei dem das Engineering-System dafür ausgestaltet und eingerichtet ist, die computerbasierten Objekte in einer Datenbank des Engineering-Systems persistent zu speichern, die Objekte zu verwalten und die für die ausgewählten Mess- und/oder Zustandsgrößen spezifizierten Bedingungen zur Erzeugung der Alarme vorzugeben.

13. Prozessleitsystem nach einem der Ansprüche 11 oder 12,
bei dem die Steuerungseinrichtung (200) ferner dafür ausgestaltet und eingerichtet ist, die computerbasierten Objekte und die ihnen zugeordneten Mess- oder Zustandsgrößen zu einem Prozessabbild zu aggregieren und das Prozessabbild laufend zu aktualisieren.
